# EUROPEAN PATENT APPLICATION

(11) **EP 2 141 869 A1**
(43) Date of publication of application: **06.01.2010**
(21) Application number: 09164065.6
(22) Date of filing: 29.06.2009
(51) Int. Cl.: H04L 12/56, H04W 72/04

(54) **Efficient bandwidth request for broadband wireless networks**

(30) Priority: 30.06.2008 US 217137
(71) Applicant: Intel Corporation, Santa Clara, CA 95054 (US)
(72) Inventor: Li, Qinghua, Sunnyvale, CA 94087 (US); Yang, Xiangying, Portland, OR 97229 (US); Yin, Hujun, San Jose, CA 95131 (US); Zhu, Yuan, 100012, Chao Yang District Beijing (CN)
(74) Representative: Hutchinson, Glenn Stanley

(57) **Abstract**

Methods (200) and apparatuses (500) for scheduling transmissions between a base station and multiple user stations in a broadband wireless access network may include a subscriber station generating (215) a bandwidth request which includes one of a limited number of available and predefined preamble sequences (210) and a data portion identifying the resources requested. The subscriber station randomly selects (205) a contention slot in a wireless channel, allocated by the base station, for sending a bandwidth request. The receiving base station is able to detect (220) the preamble sequence of bandwidth requests and differentiate between subscribers even when bandwidth requests of two or more subscribers may collide by virtue of selecting the same contention slot. In this manner, latency and overhead of bandwidth requests may be improved. Additional variants and embodiments are also disclosed.

## Description

### Background of the invention.

It is becoming more important to be able to provide telecommunication services to fixed and mobile subscribers as efficiently and inexpensively as possible. Further, the increased use of mobile applications has resulted in much focus on developing wireless systems capable of delivering large amounts of data at high speed.

Development of more efficient and higher bandwidth wireless networks has become increasingly important and addressing issues of how to maximise efficiencies in such networks is ongoing. One such issue relates to efficient scheduling of transmissions and maximising usage of bandwidth between nodes in a wireless network.

### Brief description of the drawings

Aspects, features and advantages of embodiments of the present invention will become apparent from the following description with reference to the appended drawings in which like numerals denote like elements and in which:
Fig. 1 is block diagram of an example wireless network according to various embodiments;
Fig. 2 is a flow diagram showing an exemplary method for bandwidth contention according to various embodiments;
Fig. 3 is a timing diagram showing an example signaling exchange between subscriber stations and a base station according to various embodiments;
Figs. 4.1 to 4.5 show example patterns for training preambles and bandwidth request messages according to various embodiments; and
Fig. 5 is a block diagram showing an example wireless apparatus configured for bandwidth contention in a wireless network according to one or more of the inventive methods disclosed herein.

### Detailed description

While the following detailed description may describe example embodiments of the present invention in relation to broadband wireless metropolitan area networks (WMANs), the embodiments of the invention are not limited thereto and can be applied to other types of wireless networks to realise similar advantages. Such networks specifically include, if applicable, wireless local area networks (WLANs), wireless personal area networks (WPANs) and/or wireless wide area networks (WWANs) such a cellular networks and the like. Further, while specific embodiments may be described with reference to wireless networks utilising Orthogonal Frequency Division Multiplexing (OFDM) or multiuser OFDM, otherwise referred to as Orthogonal Frequency Division Multiple Access (OFDMA), the embodiments of present invention are not limited thereto and, for example, can be implemented using other air interfaces including single carrier communication channels where suitably applicable.

The following inventive embodiments may be used in a variety of applications including transmitters and receivers of a radio system, although the present invention is not limited in this respect. Radio systems specifically included within the scope of the present invention include, but are not limited to, network interface cards (NICs), network adaptors, fixed or mobile client devices, mesh relays, base stations, gateways, bridges, hubs, routers or other network peripherals. Further, the radio systems within the scope of the invention may be implemented in cellular radiotelephone systems, satellite systems, personal communication systems (PCS), two-way radio systems and two-way pagers as well as computing devices including such radio systems such as personal computers (PCs) and related peripherals, personal digital assistants (PDAs), personal computing accessories, hand-held communication devices and all systems that may be related in nature and to which the principles of the inventive embodiments could be suitably applied.

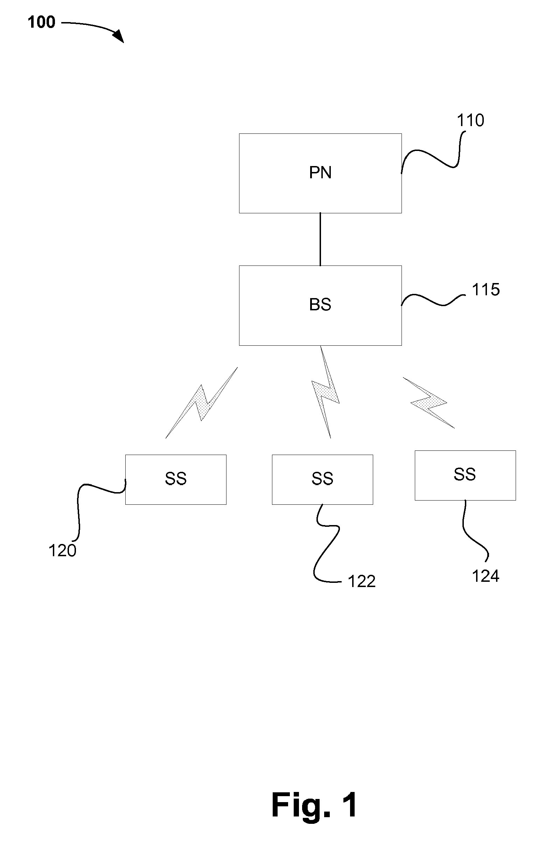

Turning to Fig. 1, an example wireless communication network 100 according to various inventive embodiments may be any wireless system capable of facilitating wireless access between a provider network (PN) 110 and one or more subscriber stations 120-124 including mobile or fixed subscribers. For example in one embodiment, network 100 may be a wireless communication network such as those contemplated by various Institute for Electrical and Electronics Engineers (IEEE) 802.16 standards for fixed and/or mobile broadband wireless access (BWA), a 3^{rd} Generation Partnership Project (3GPP) Long Term Evolution (LTE) mobile phone network and its evolution LTE-Advanced or other type of network to which the principles of the inventive embodiments could be suitably applied.

In the example configuration of Fig. 1, a base station (BS) 115 is a managing entity that may facilitate wireless communications between subscriber stations (SS) 120-124 and provider network 110 and/or between the subscriber stations themselves. BS 115 and SSs 120-124 may use a ranging process to connect and communicate with each other over a wireless channel. Ranging is generally used for uplink (i.e., SS to BS) bandwidth requests, frequency/timing correction, power control, etc. The ranging for identification and initial bandwidth request for each subscriber station 120-124 generally consists of these steps: First, the subscriber station sends a code division multiple access (CDMA) code in a ranging subchannel, where a subchannel is a time-frequency block of transmission resource. Second, a proximate BS detects the code and in response, broadcasts a code index, a subchannel index, and an allocated subchannel for the SS to send a bandwidth request message. Third, the SS submits the bandwidth request in the allocated subchannel.

This process results in a minimum delay of at least two frames, e.g., about 10ms. In practice, these steps may also often have to be repeated more than once due to collision with other SSs ranging, interference or fading, and thus the conventional ranging approach may result in excessive latency that may be unacceptable for delay sensitive traffic. In addition to the delay of this conventional ranging process, it is estimated that roughly 296 subcarriers, or approximately ½ an OFDMA symbol, may be consumed, which is a burdensome overhead.

Embodiments of the present invention relate to reducing at least one of the overhead and latency of the conventional bandwidth contention process. Some embodiments realise such reduction(s) by generally reducing the CDMA code transmission and the bandwidth request submission into one single step.

To better clarify the advantages of the inventive embodiments, a more detailed example of a related art identification and bandwidth contention process may include:
- A subscriber station (SS) sends a CDMA code to the BS. This consumes a time-frequency resource of 144 subcarriers (by one OFDM symbol) and this code is for the BS to be able to differentiate between SSs;
- If the SS transmission above was detected by the BS, the BS will broadcasts a code index. In addition, the BS allocates an uplink resource for the SS to submit a bandwidth request, which consumes 56 subcarriers;
- The SS next sends a short preamble along with a bandwidth request, which consumes 96 subcarriers;
- In response to the request, the BS allocates a resource for the uplink transmission and broadcasts the allocation. This consumes 56 subcarriers; and
- The SS sends the uplink data to the BS using the allocated resource.

The number of subcarriers in each step is computed according to the IEEE 802.16e standard (IEEE 802.16e-2005) and reasonable assumptions. For example, in step 1, the CDMA code is binary and binary phase shift keying (BPSK) modulated and therefore each bit takes one subcarrier. In steps 2 and 4, the downlink and uplink map, which defines the allocated resource, is assumed to be quadrature phase shift keying (QPSK) modulated with a code rate of ½ without repetition. In step 3, the preamble is sent over 48 subcarriers in one OFDMA symbol and the bandwidth request message is sent in the subsequent OFDMA symbol over the same subcarriers using QPSK with a code rate of ½.

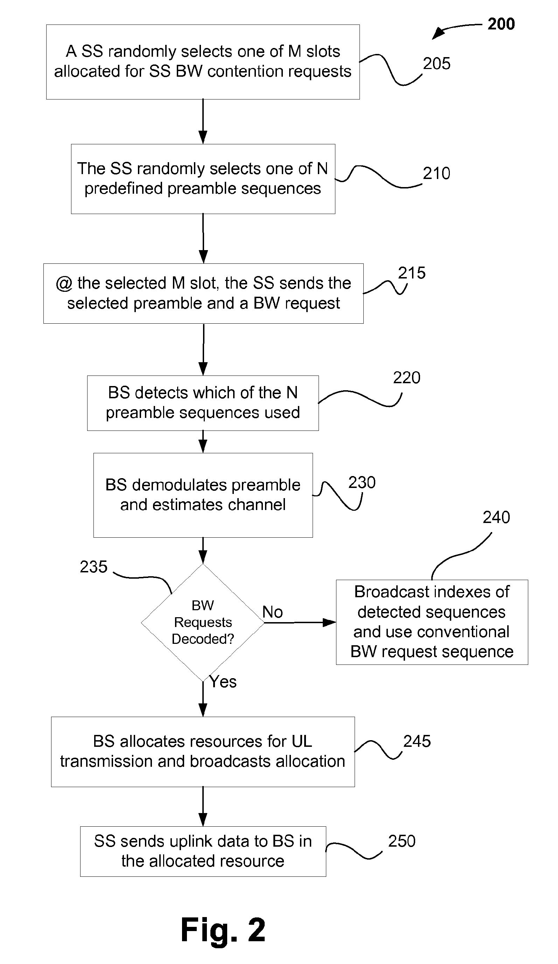

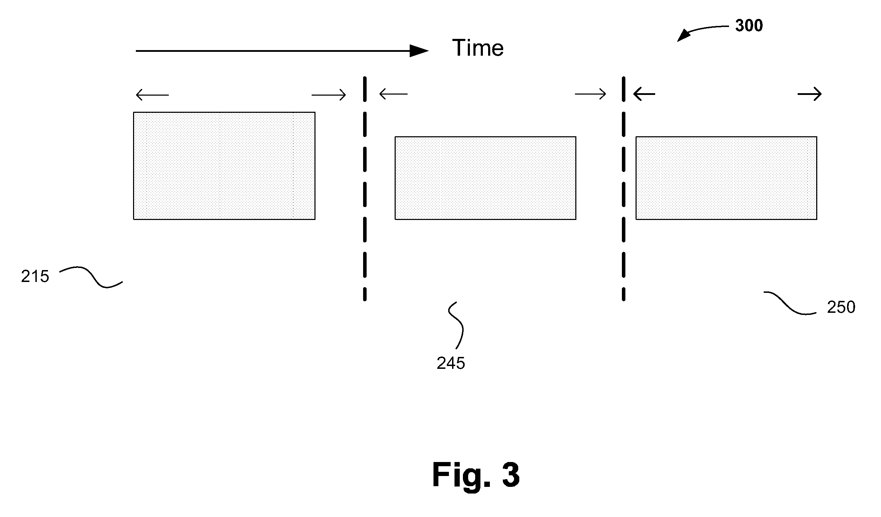

Referring to Figs. 2 and 3, an improved bandwidth contention process 200 may initially include a BS allocating/making available a number (M) of contention slots for SSs to submit bandwidth requests. The SS may randomly select 205 one of the M slots and also randomly select 210 one of (N) predefined preamble sequences available for channel training. The SS may then send 215 the bandwidth (BW) request in the selected contention slot which includes the selected preamble along with the BW request data following the preamble.

In an alternative example, instead of randomly selecting the slot and the sequence, in an alternative example, the SS uses the selection of the slot and/or the sequence to carry partial information about the SS ID and the bandwidth request message, where the SS ID is for the BS to differentiate contending SSs. For one example, the SS ID and/or the bandwidth request message may be encoded by a forward error correction (FEC) code. Some part of the output codebits are used as a slot index to select a slot while another part is used to select the sequence. A transformation such as linear combination may be applied to all the codebits to generate the selection indexes. For this case, a joint detection of the preamble sequence and the message bits can improve the performance as compared to sequential detection of the preamble sequence and then the message bits. For another example, the FEC coding step in the previous example may be skipped and the SS ID and message bits are used directly to generate the selection indexes.

Since the BS knows the available predefined preamble sequences, it is able to detect and demodulate 230 at least the preamble of a BW request sent by the SS in order to estimate the channel. However, if in step 235 the number of SSs transmitting in the same contention slot exceeds the message decoding capability of the BS, the BS may still be capable of detecting some preamble sequences and some associate data but will likely lose the other sequences and associate data in the collided bandwidth requests. In this case, the BS can announce 240 the indexes of the detected sequences without decoding associate data and continue the contention process as in step two of the conventional scheme (e.g., in the downlink subframe, the BS may include a resource allocation for the SS to request bandwidth). For simplicity, however, the collided SS can simply contend again from scratch (e.g., steps 205, 210, 215) in the next frame.

If 235 the BW request data was decodable, the BS may decode 245 the data in the BW request, allocate the requested resources for uplink transmission and broadcast the allocation to the SS. Thereafter, the SS would send 250 its uplink data to the BS in the allocated resource. To enhance the reliability, embedded BW request data (including either SS-ID, BW-REQ buffer size or other related parameters) may use compressed information, e.g. a buffer size report with coarse granularity, so that the total information to transmit is smaller than those transmitted in regular procedure.

Fig. 3, shows an example messaging sequence 300 corresponding to the bandwidth contention process 200 of Fig. 2. As can be seen, the latency of messaging and number of subcarriers used in process 200 may be significantly reduced as compared to the conventional process.

Merely by way of a simple example, four preamble sequences can be predefined for both channel training and differentiation of collided subscriber stations. The four sequences are to differentiate only the subscribers that simultaneously contend in the same contention slot. Depending on the detection abilities of the BS, if the BS is unable to detect any sequences once SS collision occurs, then a single preamble would be sufficient. However, using more advanced techniques, it is likely the BS can detect two sequences simultaneously. With this capability, four sequences (or more) are desirable because two collided SSs will randomly select the same sequence only 25% of the time.

Full subscriber differentiation (or identification) relies on the detection of the bandwidth request message. Each SS can thus randomly select one out of the four (or more) available preambles for the channel training of its bandwidth request message. The BS receives the preamble and detects which of the four sequences is sent. The detection technique may be similar to those used in the cell preamble search at the association step or other known techniques that can preferably simultaneously detect two superimposed sequences. After the sequence detection, the data sequence in the preamble is known to the BS and the preamble can then be used for channel training. It is noted that the signal requirement of the preamble sequence detection is much lower than that of the channel estimation for data detection, which is why the data in bandwidth requests of collided SS messaging may generally not be discernable.

In the previous example, the sequence detection only needs to extract 2-bit information of the sequence index out of the training preamble (using non-coherent or coherent detection), while the channel estimation needs to extract channel information out of the training preamble for each subcarrier, where 24 (or 48) distributed subcarriers are typically used for the bandwidth request message. Namely, if the channel training preamble is sufficient for the channel estimation, then it must be sufficient for the sequence differentiation, where each sequence represents one SS. This justifies combing the collided subscriber differentiation and the subsequent channel training, which is important for overhead and delay reduction.

Since each SS submits the bandwidth request independently and randomly, the arrival of their signals at the contention slots follows the Poisson distribution for a large number of SSs, or precisely the Binomial distribution. When the success rate of the request is maximised, no SS contends for 37% of the time; exactly one SS submits a request for 37% of the time; and more than one will SS collide for 26% of the time. Therefore, the efficiency of the contention channel is about 1/3 if the BS can only detect one CDMA code. The 1/3 efficiency depends only on the collision and not the signal-to-noise ratio SNR. In certain embodiments, the network will use coherent modulation, which will utilise a smaller overhead than the conventional systems that uses both non-coherent and coherent modulations. For each trial according to the given examples, the overhead is only 96 subcarriers for the inventive embodiments, which is about 1/3 of the conventional bandwidth contention scheme which utilizes 296 subcarriers. The overhead reduction is apparent. Furthermore, for each successful SS, the contention delay is reduced by one frame.

To facilitate the channel training and subscriber differentiation, the preamble sequences can be orthogonal or have low cross-correlations such as, for example, like CDMA codes. Since the preamble is used primarily to differentiate collided subscribers, the number of the sequences should be limited to, for example, 4-8 although the inventive embodiments are not so limited. The intercell cross correlation property is also important to consider. Zadoff Chu sequences could be considered. Through proper sequences planning together with proper receiver design, there is potential gain in interference limited scenario when detecting the preambles.

To increase reliability of decoding the message, channel coding may be applied. For example if the info bits are designed to be 9-bits, we can apply Reed-Solomon codes with rate 3/7 and further convolutional codes with rate 1/4 to make the message reliable in quite low SNRs. The CRC may also possibly be applied to message bits or the sequences bits to enable the BS to judge if the message has errors. In particular, mapping CRC onto sequence bits eliminates the case where preamble/data detection are correct but CRC bits are in error, in the context of the proposed fast BW request. This is because when the preamble sequence detection and the associated data decoding are both correct, their prerequisite, the preamble sequence selection (carrying the CRC information) is unlikely in error. In addition, the randomness in the CRC information, i.e. contenders will randomly select contention slot/sequence with almost uniform probabilities, ensures a good load balancing among contention channel.

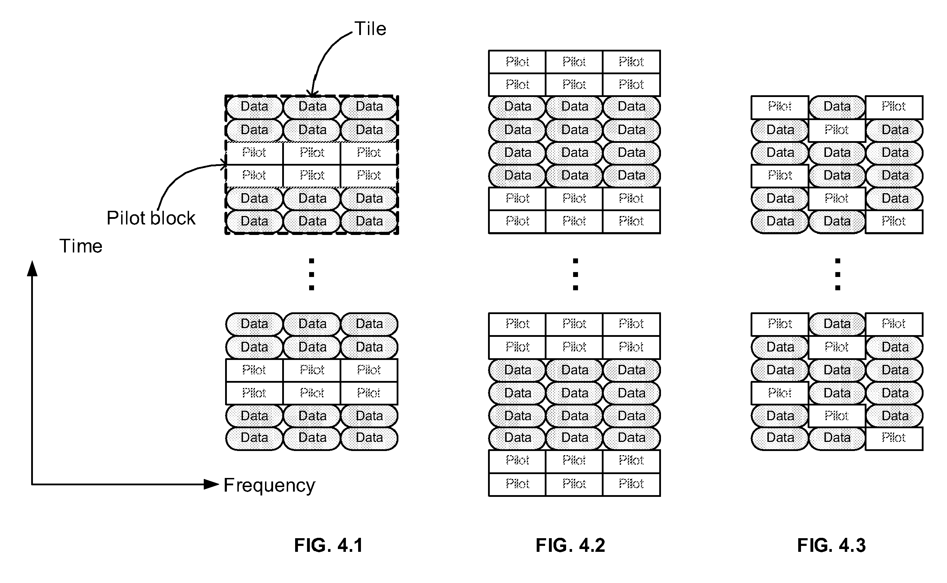

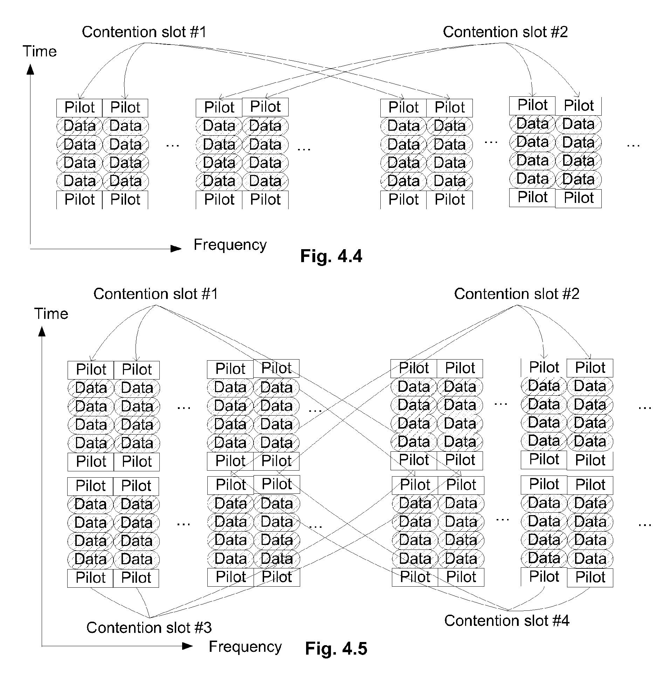

In alternate embodiments, instead of using a dedicated preamble, channel training signals can also be distributed across frequency and time as pilots as shown in Figs. 4.1 to 4.5. The data subcarriers in the patterns 4.1-4.5 carry the actual bandwidth request message, whose demodulation relies on the channel estimation from the pilots. The pilots in each pilot block are modulated by one (orthogonal) sequence, which is used for collided subscriber differentiation. It is desirable that the pilots of each sequence stay close each other in frequency and time as shown in Figs. 4.1 and 4.2 so that the channel response of the pilots vary little, which reduces the error rate of the sequence detection. Note that the idea can be designed in various patterns, for example exchanging the frequency and time axis of Figs. 4.1-4.3, in which simple frequency-domain correlation can be used on preamble detection. The size of the pilot block is determined by the number of sequences. For the example in Figs. 4.1 and 4.2, the pilot block can support up to six sequences. Multiple tiles of pilot/data subcarriers can be allocated across frequency (and time) to obtain diversity gain and to carry the whole bandwidth request as shown in Figs. 4.1 and 4.2. The distributed pilot locations in Fig. 4.3 may be used in favor of the data detection of the request message but is not as desirable for the sequence detection. Fig. 4.4 uses two (or multiple) contiguous sub-tiles located faraway in the frequency domain to form one contention slot. Besides frequency domain, the sub-tiles can be far apart in time domain too. The major benefit of this format is that it can enjoy both frequency domain diversity gain and good channel estimation performance. The same preamble sequence can be sent in the pilot part of two sub-tiles, or a long preamble sequence is distributed across the pilot part of the two sub-tiles. Fig. 4.5 shows the mapping of two sub-tiles into two contiguous same subframes. This may further improve the coverage of Fig. 4.4.

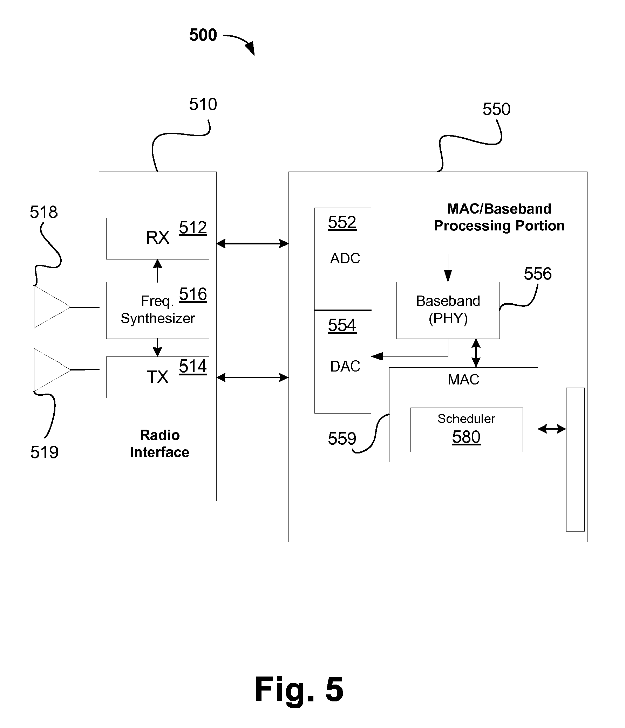

Referring to Fig. 5, an apparatus 500 for use in a wireless network may include a processing circuit 550 including logic (e.g., circuitry, processor and software, or combination thereof) to perform abbreviated bandwidth requests/grants as described in one or more of the processes above. In certain non-limiting embodiments, apparatus 500 may generally include a radio frequency (RF) interface 510 and a medium access controller (MAC)/baseband processor portion 550.

In one example embodiment, RF interface 510 may be any component or combination of components adapted to send and receive multi-carrier modulated signals (e.g., OFDMA) although the inventive embodiments are not limited to any specific over-the-air (OTA) interface or modulation scheme. RF interface 510 may include, for example, a receiver 512, a transmitter 514 and a frequency synthesizer 516. Interface 510 may also include bias controls, a crystal oscillator and/or one or more antennas 518, 519 if desired. Furthermore, RF interface 510 may alternatively or additionally use external voltage-controlled oscillators (VCOs), surface acoustic wave filters, intermediate frequency (IF) filters and/or radio frequency (RF) filters as desired. Various RF interface designs and their operation are known in the art and an expansive description thereof is therefore omitted.

Processing portion 550 may communicate with RF interface 510 to process receive/transmit signals and may include, by way of example only, an analog-to-digital converter 552 for down converting received signals, a digital-to-analog converter 554 for up converting signals for transmission, and if desired, a baseband processor 556 for physical (PHY) link layer processing of respective receive/transmit signals. Processing portion 550 may also include or be comprised of a processing circuit 559 for medium access control (MAC)/data link layer processing.

In certain embodiments, MAC processing circuit 559 may include a scheduler 580, in combination with additional circuitry such as a buffer memory (not shown) and baseband circuit 556, may function to process bandwidth requests in the embodiments previously described. Alternatively or additionally, baseband processing circuit 556 may perform these processes independently of MAC processing circuit 559. MAC and PHY processing may also be integrated into a single circuit if desired.

Apparatus 500 may be, for example, a base station, an access point, a hybrid coordinator, a wireless router or alternatively a fixed or mobile subscriber station including a or NIC and/or network adaptor for computing devices. Accordingly, the previously described functions and/or specific configurations of apparatus 500 could be included or omitted as suitably desired. In some embodiments apparatus 500 may be configured to be compatible with protocols and frequencies associated one or more of the IEEE 802.16 standards for broadband wireless networks, although the embodiments are not limited in this respect.

Embodiments of apparatus 500 may be implemented using single input single output (SISO) architectures. However, as shown in Fig. 5, certain preferred implementations may include multiple antennas (e.g., 518, 519) for transmission and/or reception using spatial division multiple access (SDMA) and/or multiple input multiple output (MIMO) communication techniques. Further, embodiments of the invention may utilize multi-carrier code division multiplexing (MC-CDMA) multi-carrier direct sequence code division multiplexing (MC-DS-CDMA) for OTA link access or any other modulation or multiplexing scheme compatible with the features of the inventive embodiments.

The components and features of station 500 may be implemented using any combination of discrete circuitry, application specific integrated circuits (ASICs), logic gates and/or single chip architectures. Further, the features of apparatus 500 may be implemented using microcontrollers, programmable logic arrays and/or microprocessors or any combination of the foregoing where suitably appropriate. It is noted that hardware, firmware and/or software elements may be collectively or individually referred to as "logic" or "circuit".

It should be appreciated that the example apparatus 500 shown in the block diagram of Fig. 5 represents only one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments of the present invention.

Unless contrary to physical possibility, the inventors envision the methods described herein: (i) may be performed in any sequence and/or in any combination; and (ii) the components of respective embodiments may be combined in any manner.

Embodiments of the invention also encompass software or other machine executable code comprising instructions that are arranged, when executed, to implement any method described or claimed herein or to realised any apparatus, system or other machine described or claimed herein. Furthermore, embodiments also encompass machine-readable medium storing such software or other machine executable code. One skilled in the art understands that such code could be stored using any optically, magnetically or electrically readable medium such as, for example, optical storage, magnetic storage and electrical storage in the form of, for example, DVD, CD, holograms, ROMs, PROMS, EPROMs, EEPROMS, memory device and the like.

Although there have been described example embodiments of this novel invention, many variations and modifications are possible without departing from the scope of the invention. Accordingly the inventive embodiments are not limited by the specific disclosure above, but rather only by the scope of the appended claims and their legal equivalents.

## Claims

1. A method (200) for communicating in a wireless network, the method **characterised by**:
selecting (205) a contention slot within a wireless channel for sending a bandwidth request;
selecting (210) one of a limited number of predefined preamble sequences; and
sending (215) the bandwidth request during the selected contention slot, the bandwidth request comprising the selected preamble sequence and a data portion with terminal identification and an amount of resources requested for an uplink transmission.

2. The method of claim 1 further comprising:
receiving (245) a response to the sent bandwidth request, the response comprising an uplink map allocating resources for the uplink transmission.

3. The method of claims 1 or 2 wherein the selected preamble sequence is for estimating the wireless channel.

4. The method of claims 1, 2 or 3 wherein the contention slot and preamble sequence are selected randomly.

5. The method of any one of claims 1 to 4 wherein the bandwidth request is sent using orthogonal frequency division multiple access (OFDMA) modulation.

6. The method of any one of claims 1 to 5 wherein the preamble sequences are predefined to differentiate between subscribers station having colliding bandwidth requests.

7. A method (200) of communicating in a wireless network, the method **characterized by**:
receiving a bandwidth request over a wireless channel, the bandwidth request including one of a limited number of predefined preamble sequences and a data portion identifying an amount of bandwidth requested for an uplink transmission;
detecting (220) which of the preamble sequences is included in the received bandwidth request;
estimating (230) the wireless channel based on the detected preamble;
decoding (245) the data portion in the bandwidth request; and
allocating a resource for the uplink transmission.

8. The method of claim 7 wherein the preamble is modulated so that it may be detected using only coherent detection.

9. The methods of claim 7 or 8 wherein the wireless network comprises a broadband wireless access (BWA) network.

10. The method of any one of claims 7 to 9 wherein allocating the resource comprises, at least in part, sending an uplink map information element in a downlink subframe, the uplink map identifying which subchannels of an uplink subframe are assigned to a subscriber for the uplink transmission.

11. An apparatus (500) for use in a wireless network, the apparatus comprising:
a processing circuit (550) to generate a bandwidth request message for transmission in a randomly selected one of a plurality of available contention slots within a wireless channel;
the bandwidth request message **characterized by** at least two portions including a first portion having a randomly selected one of a limited number of available predefined preamble sequences to differentiate between subscribers and estimate the wireless channel and a second portion including data identifying an amount of bandwidth requested for an uplink transmission.

12. The apparatus of claim 11 wherein the plurality of available contention slots are allocated by a different apparatus.

13. The apparatus of either of claims 11 or 12 further comprising a radio frequency (RF) circuit (510) coupled to the processing circuit, the RF circuit including a plurality of antennas (518, 519) configured for multiple input multiple output (MIMO) communications.

14. The apparatus of any one of claims 11-13 wherein the apparatus comprises one of a fixed or mobile subscriber station (120, 122, 124).
